# EUROPEAN PATENT APPLICATION

(11) **EP 2 851 716 A1**
(43) Date of publication of application: **25.03.2015**
(21) Application number: 14185616.1
(22) Date of filing: 19.09.2014
(51) Int. Cl.: G02B 5/20, H01S 3/22, H01S 3/034, G02B 5/28

(54) **Laser-operated light source**

(30) Priority: 20.09.2013 DE 102013110389
(71) Applicant: Qioptiq Photonics GmbH & Co. KG, 37081 Göttingen (DE)
(72) Inventor: Bischoff, Martin, 37120 Bovenden (DE); Nowitzki, Tobias, 31171 Nordstemmen (DE); Thöniß, Thomas, 37083 Göttingen (DE); Frerking, Dieter, 37181 Gladebeck (DE); Spruch, Claus, 37075 Göttingen (DE)
(74) Representative: Wablat Lange Karthaus

(57) **Abstract**

A laser-operated light source encompasses a chamber for accommodating a gaseous medium for generating a plasma, which emits radiation in response to the operation of the light source under the impact of the laser radiation. The light source encompasses a housing for accommodating the chamber. The invention provides for optical filter means, which are assigned to the housing and/or which are arranged downstream from the housing in the light path of emitted radiation. The optical filter means serve to spectrally filter the radiation emitted by the plasma in response to the operation of the light source.

## Description

### FIELD OF THE INVENTION

The present invention is generally related to laser-operated light sources.

### BACKGROUND OF THE INVENTION

Laser-operated light sources are generally known and are used in, for instance, the semiconductor industry.

In some instances, these laser-operated light sources can include a chamber for accommodating a gaseous medium that is used to generate plasma. The plasma, in response to being irradiated with laser radiation, can emit radiation that is useable in connection with various processes in the semiconductor industry, as well as other industries.

A need exists for consolidated and smaller structures that can produce high quality light for these processes and that will address other deficiencies and inadequacies of prior technologies. This need is particularly significant as it relates to producing and/or measuring very small structure.

### SUMMARY OF THE INVENTION

The concepts disclosed herein relate to laser-operated light sources, which will also be referred to as light sources herein below, that encompass a chamber for accommodating a gaseous medium, which can be formed by a noble gas, for example. The gaseous medium serves to generate plasma. Provisions are made for an ignition source, for example in the form of electrodes, for ionizing the gaseous medium for generating the plasma.

The plasma, which is generated in this manner, is irradiated with laser radiation in response to the operation of the light source, and emits radiation, for example visible light, which can be used in a downstream process, for example in the semiconductor industry. The chamber can be defined and limited by a bulb, for example. To accommodate the chamber, provisions are made for a housing, which is also referred to herein as lamp housing. This housing serves to define the chamber and/or to accommodate or support other components of the light source disclosed herein.

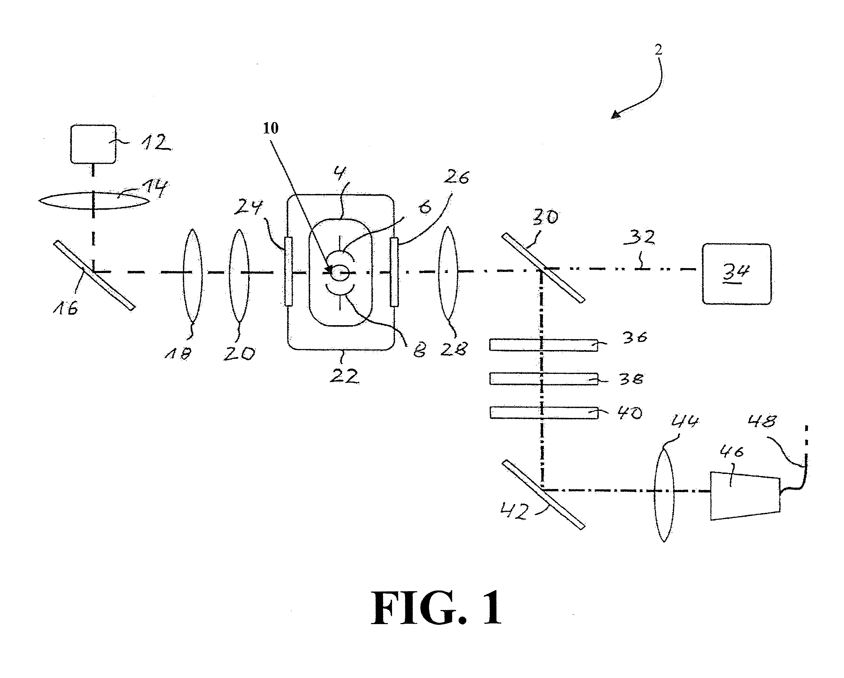

Embodiments of the present invention provide a laser-operated light source. Briefly described, in architecture, one embodiment of the system, among others, can be implemented as follows. The system contains a chamber for accommodating a gaseous medium for generating a plasma, which emits radiation in response to the operation of the light source under the impact of the laser radiation, comprising a housing for accommodating the chamber and comprising optical filter means, which are assigned to the housing and/or which are arranged downstream from the housing in the light path of emitted radiation, for spectrally filtering the radiation emitted by the plasma in response to the operation of the light source. In a typical implementation, such as the one shown in FIG. 1, spectral filtering is performed by the combination of the optical elements or optical components between the plasma source and the fiber coupler.

The invention provides for optical filter means, which are assigned to the housing and/or which are arranged downstream from the housing in the light path of emitted useful radiation, for spectrally filtering the radiation emitted by the plasma in response to the operation of the light source.

Due to the fact that the filter means are assigned to the housing, for example and in particular integrated into the housing or arranged downstream from the housing, significant advantages result with regard to the production and the operation of the light source.

As compared to embodiments, in the case of which optical filter means are assigned to the chamber and are attached to a bulb, which defines the chamber, in form of a coating, for example, the production of the light source according to the invention is simplified in that filters of the optical filter means can be integrated into the housing of the light source, for example.

According to the invention, it is also possible for at least one of the filters to be an optical band-pass filter, as it is provided by an advantageous and practical further development. In particular, provision can also be made according to an advantageous further development for a plurality of first filters and for a plurality of second filters, which are introduced optionally into the light path. For example, it is possible for the plurality of first filters and for the plurality of second filters to be band-pass filters in each case, which are optionally introduced into the light path of the useful signal, so that a spectral formation of the output signal of the light source with different band-pass filters is possible in this manner.

Another further development of the invention provides for at least one of the filters to be an ND filter. By means of a corresponding ND (Neutral Density) filter, the intensity of the output signal of the light source can be reduced according to the respective requirements.

Other systems, methods, features, and advantages of the present invention will be or become apparent to one with skill in the art upon examination of the following drawings and detailed description. It is intended that all such additional systems, methods, features, and advantages be included within this description, be within the scope of the present invention, and be protected by the accompanying claims.

### BRIEF DESCRIPTION OF THE DRAWINGS

Many aspects of the invention can be better understood with reference to the following drawing. The components in the drawing are not necessarily to scale, emphasis instead being placed upon clearly illustrating the principles of the present invention. The invention will be explained below by means of the enclosed drawing, the sole figure of which shows an exemplary embodiment of a laser-operated light source according to the invention in a highly diagramed manner. All of the described features, which are claimed in the patent claims and which are illustrated in the drawing, thereby form the subject matter of the invention, alone as well as in any suitable combination with one another, regardless of their combination in the patent claims and regardless of their dependency as well as regardless of the description or illustration thereof in the drawings, respectively.

FIG. 1 is a schematic drawing illustrating an exemplary embodiment of a laser-operated light source 2 according to the present invention,

### DETAILED DESCRIPTION

The present invention is based on the object of increasing the optical quality and thus the quality of a laser-operated light source.

FIG. 1 is a schematic drawing illustrating an exemplary embodiment of a laser-operated light source 2 according to the present invention, which encompasses a chamber 4 for accommodating a gaseous medium. In the case of the illustrated exemplary embodiment, the chamber 4 is formed by a bulb, in which Xenon is provided as an ionizable gaseous medium. To ionize the gaseous medium and to thus generate a plasma, provision is made in the interior of the chamber 4 for an ignition source, which is formed by an electrode pair 6, 8 in the case of this exemplary embodiment. The plasma is suggested in the drawing at reference numeral 10. The plasma 10 emits radiation in response to the operation of the light source 2 under the impact of the laser radiation of a laser 12. As illustrated in the drawing, the laser beam of the laser 12 is guided to a beam expander 18, which expands the laser beam, via a collimator 14 and a passive reflector 16. A focusing optics 20, which focuses the laser beam into the chamber 4, is arranged downstream from the beam expander 18.

The chamber 4 is accommodated in a housing 22, which defines the chamber 4 and may, in some implementations, mechanically hold one or more other components of or associated with the light source 2.

In the case of the illustrated exemplary embodiment, the housing 22 encompasses two windows, which are transmissive for useful radiation, namely an entrance window 24 for the entrance of the laser radiation of the laser 12 into the interior of the housing 22, and an exit window 26 for the exit of useful radiation from the housing 22. The phrase "useful radiation" or the like, as used herein, should be interpreted broadly to include any type of light that is useful for whatever purpose the light is being generated. Examples include producing and/or measuring very small structure, such as those on the order of less than 22nm. In some implementations, the plasma emits radiation with wavelengths from deep UV to the IR spectral range. In some such implementations, only the visible light and/or a part (or all) of the near infrared range is useful. In the case of the illustrated exemplary embodiment, the laser 12 generates laser radiation within the NIR (near-infrared) wavelength range (e.g., from 1000nm to 1100nm or from 1060nm to 1080nm). In the case of this exemplary embodiment, the useful radiation of the light source 2 is formed by means of light within the visible as well as near-infrared spectral range below the wavelength of the laser radiation (e,g., 400nm to 800 nm, or 400 nm to 700nm or 350nm to 700nm or 350nm to 900nm), which is created in response to the irradiation of the plasma 10. However, wavelengths of up to 800 nm are also possible. In response to the irradiation of the plasma 10, stray radiation, for example radiation within the UV range, is also created in addition to the useful radiation. In some implementations, stray radiation may be understood as any radiation other than the useful radiation.

According to the invention, provision is made for optical filter means for spectrally filtering the radiation, which is emitted by the plasma 10 in response to the operation of the light source 2, wherein the optical filter means are coupled to (e.g., integrated with/mounted to) the housing 22 and/or are arranged downstream from the housing 22 in the light path of radiation, which is emitted by the plasma.

In the case of the illustrated exemplary embodiment, at least one optical filter of the optical filter means is arranged and/or embodied in or at a window (e.g., 24), in that at least one optical filter is formed by a coating of a window (e.g., 24). In a typical implementation, an optical filter is a device that changes an input signal in a certain and defined way. In the case of the illustrated exemplary embodiment, at least one window (e.g., 24) encompasses at least two coatings comprising a different functionality. In some implementations, a coating can consist of a certain number of layers with different refractive indices. One exemplary design approach includes alternating high index (e.g., TiO2, HfO2, Ta2O5, Nb2O5, etc.) and low index materials (like SiO2, MgF2, etc.). In detail, the entrance window 24 encompasses an anti-reflex coating, which is adapted to transmit the wavelength of the laser 12 to the largest possible extent. In a typical implementation, naturally, the transmission of an uncoated window is around 92%. With a both side AR coating, the transmission can be increased to >99%, even >99,5%. In general, an anti-reflex coating is a coating that increases the transmission in a certain wavelength range. It reduces the natural reflections of a glass surface and, therefore, is an anti-reflection coating.

In addition, the coating of the entrance window 24 encompasses a further functionality, which is adapted to substantially block stray radiation, wherein the stray radiation is formed by UV radiation in the case of the illustrated exemplary embodiment. It is significant herein that the coating of the entrance window encompasses a further functionality. To fulfill the respective function of the coatings, it is sufficient, when the anti-reflex coating is applied to the side (outer side) of the entrance window 24, which faces the laser 12, and the coating, which serves to block UV radiation, is applied to the side (inner side) of the entrance window, which faces the chamber 4. In the case of the illustrated exemplary embodiment, both functionalities of the respective coatings are in each case applied to both sides of the entrance window 24, combined in one coating, so that the orientation of the entrance window 24 does not need to be considered in response to the assembly of the entrance window 24 at the housing 22. This avoids assembly errors and thus increases the functional reliability. Due to the fact that the UV radiation, which originates from the plasma 10, is blocked by the entrance window 24, an exit of UV radiation from the housing 22 and thus a formation of ozone in the surroundings of the housing 22 is avoided or at least reduced.

In response to the irradiation of the plasma 10 with laser radiation of the laser 12, useful radiation (or useful light) within the visible and near-infrared spectral range below the laser wavelength is created as useful radiation (or useful light or useful signal), which exits (or couples out) from the housing 22 through the exit window 26. The exit window 26 is accordingly embodied so as to be transmissive for the wavelength range of the useful light.

To prevent or to at least reduce an impact of the laser radiation of the laser 12 on the useful light, exit window an optical filter is applied to the exit window 26 in the form of a coating. In a typical implementation, the functionality of the coating at the laser wavelength is like a mirror in order to reduce the transmission of the laser wavelength. The "useful light" should be transmitted.

In the case of the illustrated exemplary embodiment, the optical filter forms an optical band-pass filter, which allows visible light to pass within a desired wavelength range (possible ranges could be, for example, 400-700 nm or 400-800nm, or 400-900nm or 350-700nm, or 350-900nm), but which blocks other wavelengths. A corresponding band-pass can be realized by means of a single coating on one side of the exit window 26. In the case of the illustrated exemplary embodiment, the band-pass, however, is realized by a series connection of two optical band-pass filters, the one of which is formed by a coating, which is applied to the inner side of the exit window 26, and the other one of which is formed by a coating, which is applied to the outer side of the exit window 26. In some implementations, the blocking range may be too broad to be realized by one coating, because the coating will become very complex and difficult to produce. Therefore, the blocking part, in those instances, may be separated (e.g. 1000-1200nm on one side and 800-1000nm on other side), whereas both sides should be transmissive for the "useful light".

Radiation outside of the wavelength range of the useful signal, in particular radiation within the NIR range, is blocked by means of the optical band-pass, which is formed in this manner. In general, the laser power is much higher than the power of the "useful light". Therefore, generally, the laser wavelength should be blocked significantly. Otherwise, a disruption in the application could be significant. In a typical implementation, the laser power should be blocked/reduced by a relatively high order of magnitude.

On principle, the exit window 26 can also be provided with a coating, which blocks UV radiation, as has been described above for the entrance window 24.

A further collimator 28, downstream from which a passive reflector 30 is arranged, is arranged downstream from the housing 22 in the light path of the useful light.

The passive reflector 30 is reflective for the useful signal within the visible wavelength range (and can go up to near IR), while it is transmissive for wavelengths within the infrared range, thus also the wavelength of the laser radiation of the laser 12, as is suggested in the drawing by means of a dash-dotted line 32. In a typical implementation the degree of reflectivity may be greater than 98%. In a typical implementation, the degree of transmissivity may be greater than 90% or even greater than 95% in the spectral range of 1050nm to 2700nm, for example. If desired, a sensor 34, which responds to infrared radiation, can be arranged downstream from the passive reflector 30. If the gas does not ignite at the onset of the operation of the light source 2, thus if no plasma 10, which absorbs the laser radiation of the laser 12 to a large extent, is created in the chamber 4, this can be determined via the IR sensor 34, in that the latter detects an increased extent of radiation within the IR wavelength range. In this case, the operation of the light source 2 can be interrupted. The functional reliability is further increased in this manner.

In the case of the illustrated exemplary embodiment, the optical filter means encompasses at least one optical filter, which is arranged within the light path of the useful radiation and spaced apart from the housing 22. In the case of the illustrated exemplary embodiment, provision is made for at least a first optical filter 36, downstream from which at least a second optical filter 38 is arranged. In the case of the illustrated exemplary embodiment, provision is made for a plurality of first optical filters 36, which in each case form band-passes comprising a different frequency response. Likewise, provision is made for a plurality of second optical filters 38, which also form band-passes comprising a different frequency response. By optionally introducing one of the first optical filters 36 or one of the second optical filters 38, the frequency response of the useful radiation can thus be influenced and the useful signal can thus be formed spectrally. In various implementations, different filters can be introduced into the optical path (e.g., set of different filters 36, set of different filters 38, set of different filters 40), each with an "open position" (no filter in optical path). Therefore, different wavelengths ("frequency response") can be selected for transmission due to a defined "introduction" of a selected filter.

In the case of the illustrated exemplary embodiment, a third optical filter 40, which is formed in the case of this exemplary embodiment by means of an ND (Neutral Density) filter and which serves the purpose of reducing the intensity of the useful radiation and thus the brightness of the light source 2, if required, is arranged downstream from the second optical filters 38. Instead of a single ND filter, provision can also be made for a plurality of ND filters, which are optionally introduced into the light path. In a typical implementation, an ND filter is an optical filter that is configured to reduce the transmission nearly equally for all wavelengths of "useful light". Typical specifications are, for example, for a transmission T: T = 40%, T = 10%, T = 1%, etc.

A further passive reflector 42, which deflects the useful light to a further collimator 44, which collimates the useful light to a fiber coupler 46, which couples the useful light into an optical fiber 48, which is arranged downstream from the third optical filter in the light path of the useful radiation. The useful light can be guided to a desired downstream process, for example in the semiconductor industry, via the optical fiber.

The light source 2 according to the invention has a relatively simple design and encompasses a high functional reliability.

Further advantages of the present invention include, but are not limited to the following. It is noted that the maintenance of the light source is simplified, because an exchange of an optical filter is possible without having to exchange the lamp bulb, due to the separation of the optical filters from the chamber or from a lamp bulb, respectively, which defines the chamber.

A particular advantage of the invention is that, without large structural effort, provision can be made for optical filters at the location, where they are required. This is not possible or is possible only with very high production effort when applying a coating to the lamp bulb.

An advantageous further development of the invention provides for at least one window, which is transmissive for useful radiation, to be arranged and/or embodied in the housing. With regard to the "input signal" of the light source, the laser radiation, which enters into the housing and into the chamber therein, forms the useful radiation, while light within a predetermined wavelength range forms the useful radiation with regard to the "output signal" of the light source.

An advantageous further development of the afore-mentioned embodiment provides for at least one optical filter of the optical filter means to be arranged and/or embodied at or in a window. With this in mind, an arrangement at a window of the housing is understood according to the invention such that an optical filter is attached or applied, respectively, to a window, for example.

An extremely advantageous further development of the afore-mentioned embodiment provides for at least one optical filter to be formed by a coating of a window. In the case of this embodiment, coatings comprising different characteristics, which are adapted to the desired purpose, can be applied directly to a window, so that the number of optically effective surfaces is reduced as compared to an embodiment, in the case of which an optical filter is placed upstream of a window.

Another further development of the invention provides for at least one window to encompass at least two coatings comprising a different functionality, which are attached either only on one side or also separately on the front and rear side. With this in mind, a different functionality is understood according to the invention such that the coatings fulfill different optical functions. For example, one coating can be an anti-reflex coating, while the other coating realizes an optical filter, for example an optical short-pass. This can also be attained in the form of only one coating. With this in mind, different individual layers of a coating, which is formed by means of a stack of layers, do not encompass a different functionality. In a typical implementation, the same functionalities can be realized with a different stack design.

A further development of the afore-mentioned embodiment provides for the coatings to be applied to different sides of the window. For example and in particular, one of the coatings can be an anti-reflex coating and the other coating can be an optical filter in the case of this embodiment.

According to the invention, however, it is also possible for the two coatings comprising a different functionality to be applied to the same side of the window. The function is thereby not assigned to individual layers in the coating design. For example, an anti-reflex coating as well as an optical filter can be applied to one side of the window.

According to the invention, it is also possible to provide the same coating on both sides of the window. If, for example, an anti-reflex coating as well as an optical filter is applied to both sides of the window, this window can be assembled to the housing, without considering the orientation. This simplifies the assembly.

However, provision is also made according to the invention for a different coating to be applied on both sides. On the one hand, the advantage of this embodiment is the supplementation of the functionalities and, on the other hand, the simplification of the respective layer design by dividing a complex design on two sides.

Another further development of the embodiment with the window or the windows provides for at least one window to be an entrance window, which is transmissive for the laser radiation. In the case of this embodiment, the laser radiation enters through the entrance window into the housing and into the chamber therein.

Another advantageous further development of the invention provides for at least one window to be an exit window, which is transmissive for useful light.

In response to a combination of the two afore-mentioned embodiments, the laser radiation, which is provided for exciting the plasma, thus enters through the entrance window into the housing and into the chamber therein, while useful light, thus light within a desired wavelength range, exits from the housing though the exit window.

A further advantageous further development of the invention provides for at least one window to encompass an anti-reflex coating, which is optimized with regard to the transmission of the respective useful signal. Due to the anti-reflex coating, reflection losses at the optically effective surfaces of the windows are reduced at least to a large extent.

With regard to entering into the housing, the laser radiation forms the useful signal, while the useful light forms the useful signal with regard to an exit from the housing. With regard to an exit from the housing, the exciting laser radiation accordingly forms cross talk or an error signal, because it is or can be undesired for the output signal of the light source to receive the wavelength of the exciting laser radiation in terms of a limitation of the output signal of the light source to a predetermined wavelength range. An anti-reflex coating, which is optimized with regard to the transmission of the respective useful signal, it is understood according to the invention that reflections of the useful signal are avoided as much as possible. Another advantageous further development of the invention provides for at least one optical filter to be embodied and equipped for blocking or weakening stray radiation.

According to an advantageous and practical further development of the afore-mentioned embodiment, the exit window is embodied and equipped for blocking the laser radiation, which excites the plasma. A direct impact of the laser radiation, which excites the plasma, on the output signal of the light source is avoided or reduced in this manner. The laser radiation then has impacts on the useful signal insofar as it excites the plasma, which emits the useful signal.

With regard to the entrance window, an advantageous further development of the invention provides for the entrance window to be embodied and equipped for reducing stray radiation, which emanates from the plasma. If a stray signal, which consists, for example, of UV radiation, is created in response to the irradiation of the plasma with laser radiation, for example in addition to a useful signal, which consists of visible light, an exit of the UV radiation from the housing of the light source through the entrance window is avoided or at least reduced in the case of this embodiment.

To be able to carry out a further spectral formation of the output signal after the useful signal has exited the housing of the light source, another advantageous further development of the invention provides for the optical filter means to encompass at least one optical filter, which is arranged spaced apart from the housing in the light path of the useful signal.

A further development of the afore-mentioned embodiment provides for at least a first optical filter, downstream from which at least a second optical filter is arranged.

In the case of the afore-mentioned embodiments, it is possible, for example, for the first optical filter to realize a short-pass, while the second optical filter realizes a long-pass, so that an optical band-pass filter is realized in combination of both filters.

It should be emphasized that the above-described embodiments of the present invention are merely possible examples of implementations, merely set forth for a clear understanding of the principles of the invention. Many variations and modifications may be made to the above-described embodiment(s) of the invention without departing substantially from the spirit and principles of the invention. All such modifications and variations are intended to be included herein within the scope of this disclosure and the present invention and protected by the following claims.

## Claims

1. A laser-operated light source, comprising:
a housing for accommodating a chamber, wherein the chamber accommodates a gaseous medium for generating a plasma within the chamber, wherein the plasma emits radiation in response to the operation of the light source under the impact of laser radiation; and
an optical filter means coupled to the housing and/or arranged downstream from the housing in a light path of emitted radiation, for spectrally filtering the radiation emitted by the plasma in response to the operation of the light source.

2. The light source according to claim 1, further comprising at least one window, which is transmissive for useful radiation, is coupled to the housing.

3. The light source according to claim 2, wherein at least one optical filter of the optical filter means is arranged and/or embodied at or in at least one of the windows.

4. The light source according to claim 2, wherein at least one optical filter is formed by means of a coating of at least one of the windows.

5. The light source according to claim 4, at least one window encompasses at least two coatings, wherein each respective one of the two coatings has a different functionality than the other.

6. The light source according to claim 5, wherein each of the at least two coatings is applied to a different side of the at least one window.

7. The light source according to claim 5, wherein the at least two coatings are applied to a same side of the window.

8. The light source according to claim 2, wherein at least one of the windows is an entrance window, which is transmissive for the laser radiation.

9. The light source according to claim 2, wherein at least one of the windows is an exit window, which is transmissive for useful light.

10. The light source according to claim 2, wherein at least one of the windows has an anti-reflex coating, which is adapted to transmit the useful radiation.

11. The light source according to claim 2, wherein at least one optical filter is adapted for blocking or weakening stray radiation.

12. The light source according to claim 9, wherein the exit window is adapted for blocking or weakening the laser radiation, which excites the plasma.

13. The light source according to claim 8, wherein the entrance window is adapted for blocking or weakening stray radiation, which is emitted by the plasma.

14. The light source according to claim 1, wherein the optical filter means encompasses at least one optical filter, which is arranged in the light path of the useful radiation spaced apart from the housing.

15. The light source according to claim 14, wherein provision is made for at least a first optical filter, downstream from which at least a second optical filter is arranged.

16. The light source according to claim 3, wherein at least one of the optical filters is an optical band-pass filter.

17. The light source according to claim 2, wherein at least one of the filters is a neutral density filter.

18. A laser-operated light source, comprising:
a housing for accommodating a chamber, wherein the chamber accommodates a gaseous medium for generating a plasma within the chamber, wherein the plasma emits radiation in response to the exposure to laser radiation; and
an arrangement of optical elements optically downstream from the housing in a light path of emitted radiation, for filtering the radiation emitted by the plasma in response to operation of the laser-operated light source.
